# EUROPEAN PATENT SPECIFICATION

(11) **EP 1 649 788 B1**
(45) Date of publication and mention of the grant of the patent: **04.06.2008**
(21) Application number: 03817600.4
(22) Date of filing: 25.07.2003
(51) Int. Cl.: A47G 23/02

(54) **ADJUSTABLE CUP HOLDER**
REGELBARER TASSENHALTER
SUPPORT DE TASSE REGLABLE

(43) Date of publication of application: 26.04.2006
(73) Proprietor: Lan, Yung-huei, Taipei, Taiwan 10608 (CN)
(72) Inventor: Lan, Yung-huei, Taipei, Taiwan 10608 (CN)
(74) Representative: Sarpi, Maurizio
(86) International application number: PCT/CN2003/000598
(87) International publication number: WO 2005/009183

(56) References cited:
- JP-A- 8 215 017
- JP-A- 2001 029 201
- US-A- 2 378 867
- US-A- 2 381 349
- US-A- 2 839 323
- US-A- 5 505 417
- US-A- 5 924 659

## Description

### FIELD OF THE INVENTION

The present invention is in related to an adjustable cup-holder, which is able to hold different types of cups.

### BACKGROUND OF THE INVENTION

The prior cup-holders are the types of a glass cup with a handle or a two-layer cup with stainless steel material; on the other hand, a cap can be utilized to contain a cup, but the cap is installed a handle and a pad for protecting that a table surface being not damaged by hot drink in the cup; further that, a fixing structure is designed on either the table or the cup for holding. The cup-holders or the cap are not adjustable and are only for specific cups, but there are many different types of cups with for example, dimensions, figures, etc.

Besides, due to the costs of materials as glass, paper, two-layer stainless steel, and cleaning, etc., and most of cups have no handles, pads, and fixing structures, therefore other suitable materials are needed to easily and efficiently produce such components on cups. Again, as aforesaid, there are sorts of cups, so the components to fit cups may not be possible. Hence an adjustable cup-holder with a handle, a pad, a fixing structure, etc. may be a need for fitting different types of cups.

It is also known, from US-A-2 839 323, a detachable handle structure for enveloping, holding and locking the same around an article and to permit an easy detachment and dismounting of the same.

Furthermore, an adjustable cup holder is known from US-A-5 924 659.

### SUMMARY OF THE INVENTION

The primary objective of the present invention is to provide an adjustable cup-holder for a wide range of application to versatile cups. The cup-holder has a handle and is made of plastic, alloy, metals, etc. It is then that the cup-holder is manufactured with low technology and low cost, and thus a pad, a fixing structure, etc. can be made as well. The paper cup or the glass cup contained in the cup-holder is either replaced or cleaned.

According to the present invention, the cup-holder comprises a bottom; a handle, which lower end connects the bottom; and a horizontally flexible ring; wherein, the flexible ring connects an upper end of the handle for containing different dimensions of cups.

The cup holder further comprises the features of the characterising portion of claim 7.

According to the present invention, any type of cup is easily put into and taken off from the cup-holder, further that, cups are not turned over due to the features of adjustment and fixing structure, thus the present invention is capable of applying to different sorts of cups.

### BRIEF DESCRIPTION OF THE DRAWINGS

Fig. 1 is a perspective and exploded view of a first embodiment of an adjustable cup-holder of the present invention;
Fig.2 is a partial sectional view of the first embodiment of the adjustable cup-holder of the present invention;
Fig. 3 is a partial sectional view of a bottom portion structure of the first embodiment of the adjustable cup-holder of the present invention, showing a state of the bottom portion structure being raised;
Fig. 4 is a section view along a line A-A in Fig. 3, showing a horizontally flexible ring fixing structure of the first embodiment of the adjustable cup-holder of the present invention;
Fig. 5 is a top view of the first embodiment of the adjustable cup-holder of the present invention;
Fig. 5A and Fig. 5B represent another embodiment of a structure fixing an outer side of a cup lower end of the present invention;
Fig. 5C represents a second embodiment of a structure fixing an outer side of a cup lower end of the present invention;
Fig. 6, Fig. 7 and Fig. 8 represent a third embodiment of a structure fixing an outer side of a cup lower end of the present invention;
Fig. 9 represents a fourth embodiment of a structure fixing an outer side of a cup lower end of the present invention;
Fig. 10 is a perspective and exploded view of a second embodiment of the adjustable cup-holder of the present invention;
Fig. 11 is a partial sectional view of the second embodiment of the adjustable cup-holder of the present invention;
Fig. 11A is a partial sectional view of a bottom portion structure of the second embodiment of the adjustable cup-holder of the present invention, showing a state of the bottom portion structure being raised;
Fig. 12 is a perspective and exploded view of a third embodiment of the adjustable cup-holder of the present invention;
Fig. 13 is a partial sectional view of the third embodiment of the adjustable cup-holder of the present invention.

### DETAILED DESCRIPTION OF THE PREFERRED EMBODIMENTS

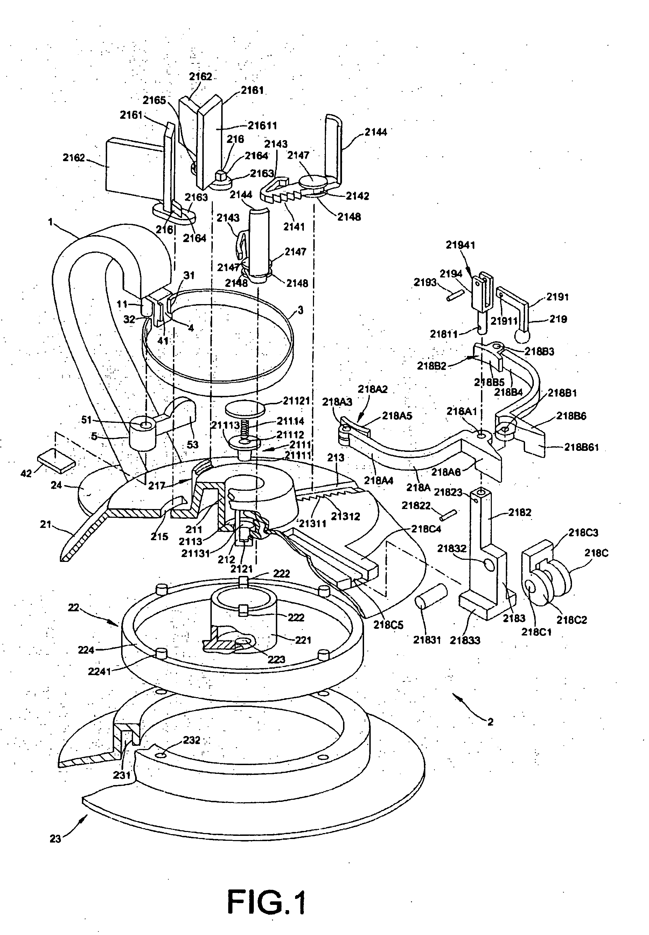

According to a first embodiment of Fig. 1 to Fig. 8, a lower end of a handle 1 is mounted on a top cover 21 of a bottom 2, an upper end of the handle 1 connects a flexible ring 3. A central portion of the top cover 21 is a cylindrical body 211 protruding downward. The cylindrical body 211 is put into a socket 221 of a chassis 22 of the top cover 21 for moving up and down. A wall of the cylindrical body 211 has two stopping slots 212 (partial stopping slot 212 is viewed in Fig. 1, another stopping slot 212 is blocked by the cylindrical body 21 and therefore cannot be seen), the stopping slots 212 symmetrically cooperate with stopping portions 222 located on an upper portion of the socket 221 of the chassis 22. Thus, the stopping portions 222 can move up and down in the stopping slots 212. While the top cover 21 is raised and the stopping slots 212 is thus moved upward, a lower edge 2121 of the stopping slots 212 touches the stopping portions 222; continuously the top cover 21 is lifted up, the stopping slots 212 hook up the stopping portions 222 to take the chassis 22 off. The stopping slots 212 and the stopping portions 222 function to prevent the disassembling of the top cover 21 and the chassis 22.

A central portion of the cylindrical body 211 of the top cover 21 is a plug 2111 moving up and down, a lower end 21111 of the plug 2111 goes through a hole 21131 of a cylindrical body bottom portion 2113 for stopping an air through hole 223 located on a central portion of the socket 221 of the chassis 22. A flange 224 around the chassis 22 encloses a ring slot 231 of a sucker 23, therefore the sucker 23 and the chassis 22 are connected and sealed each other. Four small columns 2241 of the flange 224 are inserted into four holes 232 on the sucker 23 for fixing for avoiding that the sucker 23 being taken off.

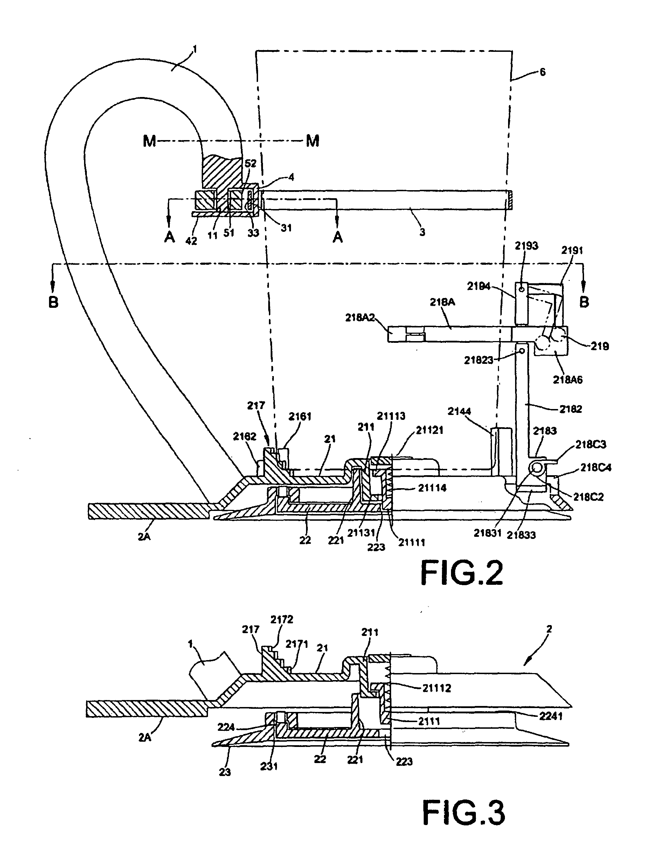

A spring 21114 is above the plug 2111, and an upper end of the spring 21114 is against a small round cover 21121 of an upper hole 2112 of the cylindrical body 211, a lower end of the spring 21114 is located into a dent 21112 of a central portion of the plug 2111. Therefore, the spring 21114 can push the plug 2111 downward. The diameter of a flange 21113 on the upper end of the plug 2111 is larger than the hole 21131. While the plug 2111 is inserted into the air through hole 223, the sucker 23 can absorb the surface of a table to fix the chassis 22, as shown in Fig. 2. While the top cover 21 is raised until the cylindrical body bottom portion 2113 touches the flange 21113 of the plug 2111, the plug 2111 is pressed by the spring 21114 and then blocks the air through hole 223. The distance for raising the top cover 21 up is a safety design to avoid the air through hole 223 being opened due to a little movement of the sucker 23. Continuously the top cover 21 has being raised, the cylindrical body bottom portion 2113 can then lift the flange 21113 of the plug 2111. Hence the air through hole 223 is opened, air goes into the sucker 23 by way of the air through hole 223, and the sucker 23 is not in vacuum to make the whole cylindrical body bottom portion be lifted very easily.

Due to the handle 1 is aside of the adjustable cup-holder, it may be strong enough, therefore the materials shall be heavy enough as well. The gravity of the cup-holder focuses on the rim of the bottom of the cup-holder. If a cup or a paper cup is not contained in the cup-holder, the cup-holder is easily turned over, therefore a suitable place of the top cover 21 or the bottom 2 under the handle 1, the chassis 22, is extended a supporting plate 2A for preventing that the cup-holder being turned over. Certainly the supporting plate 2A can be extended from the handle 1 as well. It is can be any figure of the supporting plate 2A, but the preferable one is a semicircle type.

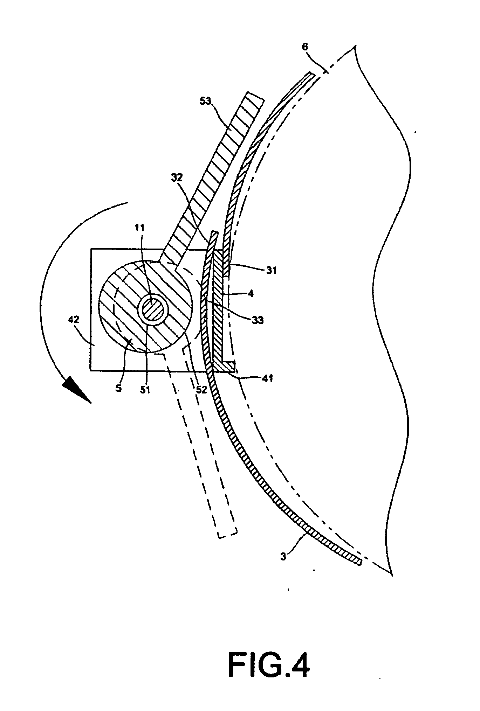

A fixing end 31 of the flexible ring 3 above the handle 1 connects a buckling plate 4 protruding from the upper end of the handle 1. A buckling cam 5 is set on the upper end of the handle 1. An axial hole 51 of the buckling cam 5 cooperates with an axis 11 elongating from the upper end of the handle 1. A free end 32 of the flexible ring 3 is in between the buckling plate 4 and the buckling cam 5. The buckling cam 5 and the axial hole 51 are not concentric, the smaller diameter part of the buckling cam 5 is turned to be close to a portion 33, shown as the active lines in Fig. 4, and the free end 32 is not clamped and moved freely. Hence, the flexible ring 3 is adjustable to suitably tie a cup 6 up. While a stirring rod 53 is poked along the direction of an arrow in Fig. 4, the smaller radius part of the buckling cam 5 is gradually departed from the portion 33; otherwise the larger radius part of the buckling cam 5 is then close to the portion 33, that is, the buckling cam 5 will touch the portion 33, shown as the dot lines in Fig. 4. Please note that the portion 33 of the flexible ring 3 is moved by the buckling cam 5 due to the friction force between the buckling cam 5 and the portion 33 while the portion 33 being gradually tied up in between the buckling cam 5 and the buckling plate 4. Besides, a protruding portion 41 of the buckling plate 4 is set to position the clamped cup 6; further, a guard 42 is under the buckling plate 4 and the axis 11 to prevent the portion 33 falling downward, shown as in Fig. 2.

The flexible ring 3 is not continuous, therefore two ends of the flexible ring 3 may be overlaped each other while the flexible ring 3 surrounding the cup 6. The diameter of the flexible ring 3 is smaller, the overlap may be longer; the diameter of the flexible ring 3 is larger, the overlap shall then be shorter. The flexible ring 3 can be adjustable to suitably fit the cup 6 and then fastened for fixing the cup 6. There are two aspects for fastening the flexible ring 3; the first is to tie up the front end and the rear end of the flexible ring 3, but not limited to the beginning end and the tail end, otherwise, the positions may be a suitable location around the front end and another suitable location around the rear end; further, there is not only the fastening of the front end and the rear end, but also that the front end is mounted on a bracket and the rear end is mounted on somewhere of the bracket; secondly, it is to fasten the flexible ring 3 and the cup-holder together. Although the present invention discloses that the end of the flexible ring 3 connects the upper end of the handle 1 and another end is an adjustable free end, on the other hand, two ends being free ends shall be another embodiments as well. As aforesaid embodiment, the two free ends are to be clamped in between the buckling plate 4 and the buckling cam 5. A couple of holes are punched on both the free front end and the free rear end, and a stick is through the holes for fixing different types of cups. Such way can be used as belts, braces, etc.

There are many ways to tie the cup-holder and the flexible ring 3 up, that is, a clamping mechanism mounted on a position of the flexible ring 3 is able to connect the flexible ring 3 and the cup-holder; alternatively, using a stick to go through the holes on both the flexible ring 3 and the cup-holder. The flexible ring 3 and the cup-holder are separate, thus they are convenient to clean, but many components may be careful for keeping and using.

Besides, the buckling cam 5 can be rotated by the axis 11 through the axial hole 51 and elongated upward from the handle 1, shown as in Fig. 2. The structure of the first embodiment is that to draw a dot line M-M for the axis 11, the buckling cam 5, the buckling plate 4 and the flexible ring 3, and the dot line M-M is a mirror, thus the mirror is reflected upward, continuously to decorate the handle 1 shall be done for structure. Otherwise, the buckling cam 5 can be rotated by the axis 11 through the axial hole 51 and elongated horizontally from the handle 1, shown as in Fig. 1. The structure of the second embodiment is that to horizontally put the axis 11 and connect the axis 11 and the end of the handle 1, continuously the buckling cam 5 and the stirring rod 53 are still on the horizontal axis 11, therefore to stir the stirring rod 53 is either to tie the flexible ring 3 up or loose it.

There are some possibilities that the cup is still shaken even if the cup is tied up by the flexible ring 3. Hence, there is a need to settle some fasteners under the lower portion of the cup. The adopted way is to bind the lower portion of the cup by means of the flexible ring 3, and the buckling plate 4 of the flexible ring 3 is suitably set on the bottom portion 2113 or the bottom 2 of the handle 1. Due to the bottom 2 is fastened with the cup, the more convenient, reliable and economical way is to install some fasteners on the bottom 2. Due to that the bottom 2 is under the cup originally, therefore the simple way is to set some fasteners on the bottom 2. The fasteners have a couple of baffles protruding upward to hold the surrounding edge of the bottom 2, and the baffles are divided into two types, one is fixing type, another one is movable type. The fixing type of the baffles are designed as ladder figure for different diameters of cups. The ladders are closer to the center of the bottom 2, the ladders are lower. Such that, smaller cups are located into lower positions of the baffles. No matter what cups are located into lower or upper positions, cups are held tightly. Further, the organized shape of the baffles can be the type of reverse taper figure. Hence, while the cup is applied by more power into the baffles, the cup is more tied up. The bias angle of the reverse taper figure is closer to 90°, the cup is fixed more easily. More, the surface of the baffle can be covered by soft material, and the bottom 2 is hard to move while the bottom 2 being sunk into the soft material. The aforesaid two figures of the baffles may be installed some positions surrounding the bottom 2, preferably a pair of baffles are located on two sides of the handle 1, and they are symmetrical.

The movable type of the baffles are settled on the bottom 2 for holding the cup as well, a movable base is under the baffles, and a couple of tracks are on the bottom 2 for the movable base riding on. The movable base has a temporarily fixing mechanism so as to fix the movable base on the bottom 2 while the movable base moving to a certain position, continuously the baffles are capable of holding the cup.

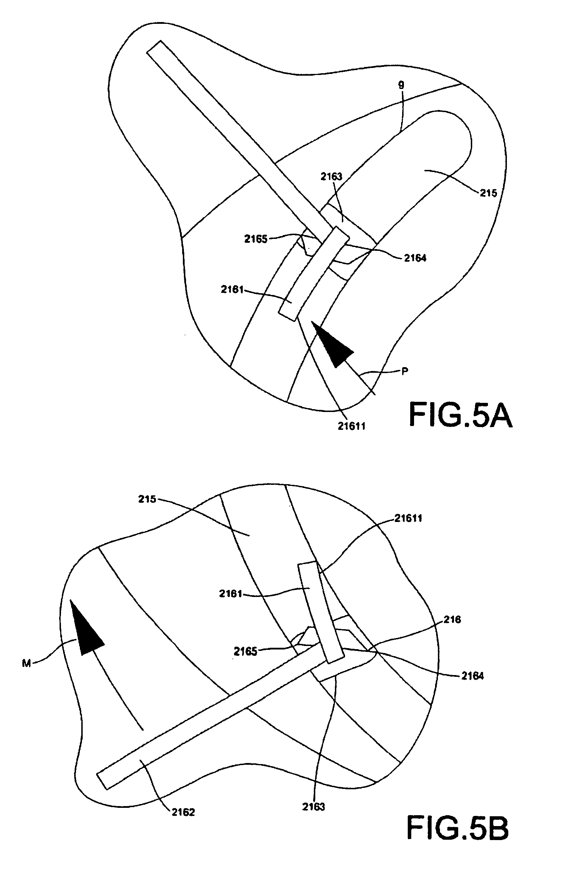

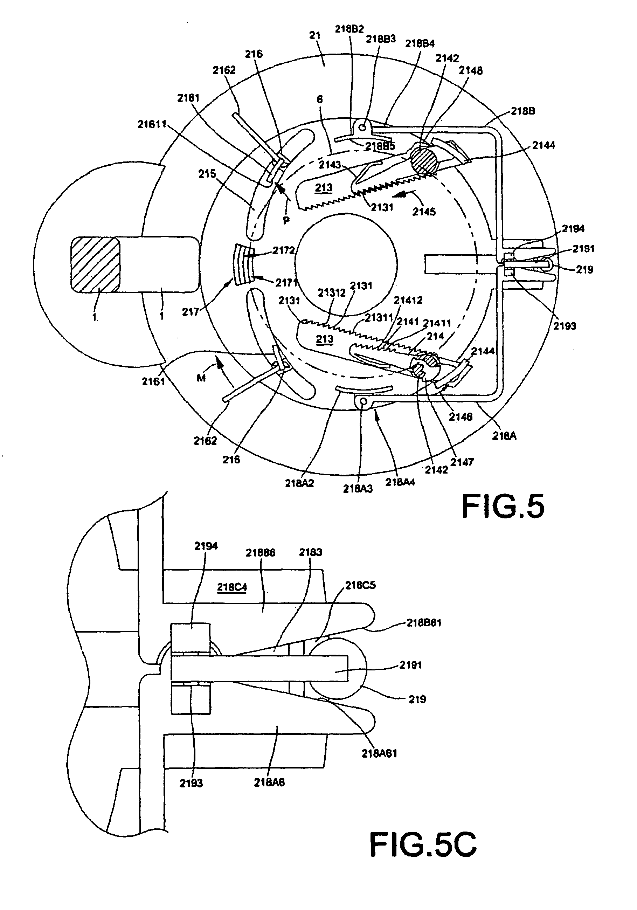

Please refer to figures, and following will describe the movable type of the baffles first, and then the fixing type of the baffles. In Fig. 5, the movable type of the baffles 2144 are arranged on a pair of line-tooth fasteners 214 and protruding upward thereon, and the baffles 2144 are curved to fit with cups. The top cover 21 has two serrate slots 213 with the line-tooth fasteners 214. Serrate line teeth 2141 of the line-tooth fasteners 214 buckle serrate line teeth 2131 of the serrate slots 213 up. Around a central portion of the line-tooth fastener 214 is an oscillating axis 2142, which diameter is basically equal to the width of the serrate slot 213. To oscillate the two ends of the line-tooth fasteners 214, the center of the oscillating axis 2142 is a support point for the oscillation. A spring piece 2143 of the line-tooth fastener 214 touches the wall of the serrate slot 213, therefore the serrate line teeth 2141 is pushed to match with the serrate line teeth 2131 by the spring piece 2143. Two sets of the serrate slots 213 and the line-tooth fasteners 214 are laid out symmetrically, shown as Fig. 5, which are two portions, one is upper, the other is lower. The spring piece 2143 of the upper line-tooth fastener 214 spreads to push the serrate line teeth 2141 to the serrate line teeth 2131. The right end of the lower line-tooth fastener 214 is twisted counterclockwise, the spring piece 2143 of the lower line-tooth fastener 214 is in the state of pressure, thus the serrate line teeth 2141 are completely off from the serrate line teeth 2131. Each line-tooth has a bevel edge and a right angle edge (including almost vertical angle). While pushing the line-tooth fastener 214 along a direction of an arrow 2145, the bevel edge 21411 of the serrate line teeth 2141 slips the bevel edge 21311 of the serrate line teeth 2131 and moves forward; while the baffle 2144 is close to the external edge of the lower end of the cup 6 (shown as a dot circle line), and therefore the serrate line teeth 2141 match with the serrate line teeth 2131, and now the right angle edge 21312 of the serrate line tooth 2131 is against the right angle edge 21412 of the serrate line tooth 2141, the line-tooth fastener 214 can not move along the opposite direction of the arrow 2145 so as to the baffle 2144 being capable of claming the cup 6 tightly. On the other hand, for the lower line-tooth fastener 214, to stir the right end of the lower line-tooth fastener 214 along a direction of an arrow 2146 is to let the spring piece 2143 be pressured, the serrate line teeth 2141 take off from the serrate line teeth 2131 continuously. The lower line-tooth fastener 214 is free to move in the slot 213 for bigger cups.

A round upper baffle 2147 and a round lower baffle 2148 are individually set beyond and below the oscillating axis 2142. Both the baffles are wider the slot 213 for clamping thereon, the lower line-tooth fastener 214 can then moves back and forth in the slot 213, and not loosed as well.

A pair of arc slots 215 are arranged on the top cover 21, and two arc sliding blocks 216 are in the two arc slots 215 respectively, and sliding back and forth therein. Each of the arc sliding blocks 216 extends a stopping plate 2161 upward, and a clamping surface 21611 of the stopping plate 2161 may clamp the cup 6. In Fig. 5B, while the sliding block 216 moves along a direction of an arrow M, the stopping plate 2161 is close to the cup 6 gradually, and continuously the clamping surface 21611 presses on the cup 6. Due to the angle of the arc slot 215 and the tangential of the cup 6 being very small, the pressure from the cup 6 to the stopping plate 2161 as the arrow P in Fig. 5A is to stop the arc sliding block 216 so as to clamping the cup 6 tightly. A stirring plate 2162 is set beside the stopping plate 2161 for pushing the arc sliding block 216. To prevent the arc sliding block 216 being separated, a protruding block 2163 is installed under the arc sliding block 216.

Shown as in Fig. 5A and Fig. 5B, the arc sliding block 216 has two sharp tips 2164 and 2165, and therefore the arc sliding block 216 is defined as a converse clamping block. While a pushing force along the direction of the arrow M is applied, the converse clamping block is then loosed to move. Otherwise, another pushing force opposite to the arrow M or the arc sliding block 216 being applied by a force as the direction of the arrow P in Fig. 5A, the arc sliding block 216 is moved clockwise, and the two sharp tips 2164 and 2165 are respectively against an arc edge g and the wall of the arc slot 215, thus the arc sliding block 216 is affixed in the arc slot 215, and the stopping plate 2161 is capable of blocking the cup 6 off.

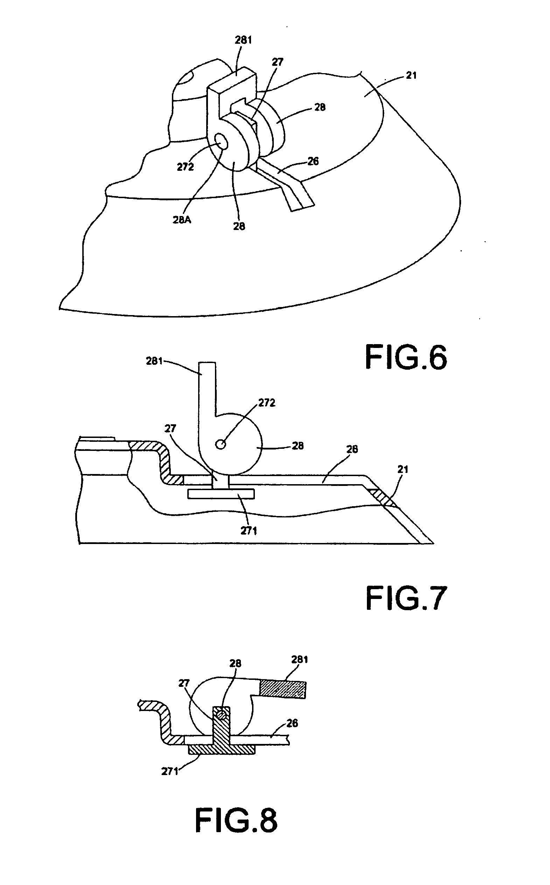

In Fig. 6 to Fig. 8, the baffle 28 is applied broadly by changing its configuration, such as an eccentric cam. The top cover 21 has a narrow slot 26 with a sliding block 27, the sliding block 27 has a flange 271 beneath for preventing to take off. A horizontal axis 272 goes through an axial hole 28A of the baffle 28 for the rotation of the baffle 28. The sliding block 27 moves to the outer edge of the cup 6 firstly, and a vertical shaft 281 is changed to be a horizontal shaft secondly, therefore the surface of the baffle 28 presses on the top cover 21 so as to that the top cover 21 being clamped between the baffle 28 and the flange 271. It is then that the sliding block 27 and the baffle 28 with the eccentric cam figure hold the cup 6 firmly. There are four such structures as aforesaid mounted on the top cover 21, alternatively one or two such structures cooperate with other bottom structures described above for grasping the cup 6.

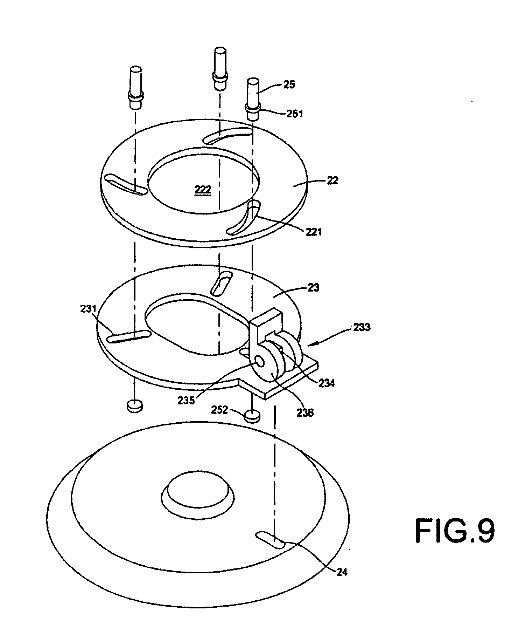

Another embodiment shown as in Fig. 9, the movable base of the baffle 28 is shaped as a cylinder, the slot and the temporarily fixing mechanism are combined to be an arc seam and a rectangular hole; further that, adding a positioning device is the way to hold the cup 6. A round adjustable plate 22 has three symmetrical involute arc seams 221 and a central hole 222. A moving plate 23 under the adjustable plate 22 has three symmetrical radial seams 231 and a central rectangular hole 232. A cam positioning device 233 is established between the moving plate 23 and the handle 1, same as shown in Fig. 7. A T-type bonding block 234 which vertical portion is slightly turned by way of the connection of the axis 235 and the eccentric cam 236. The horizontal portion of the bonding block 234 is through a long hole 24 of the top cover 21 for pressing onto an inner surface of the top cover 21. Three fastening pins 25 through the involute arc seams 221 and the radial seams 231 can be moved therein. A ring 251 is on each of the fastening pins 25, and a lower portion of the fastening pin 25 is through the involute arc seams 221 and the radial seams 231 to connect a small round plate 252. Due to the ring 251 and the small round plate 252 being larger than the seams, so the pin 25 is not taken apart and the adjustable plate 22 and the moving plate 23 will not be dismantled. To modulate the adjustable plate 22 clockwise, the fastening pins 25 are close to the center of the adjustable plate 22 simultaneously for holding the cup 6; otherwise the fastening pins 25 are off the center for releasing the cup 6. The long hole 24 of the top cover 21 allows the T-type bonding block 234 moving back and forth therein, that is, the moving plate 23 can be moved as well so as to that the centers of the three fastening pins 25 being in proportion to the axial line of the cup 6, hence the cup 6 is held correctly while moving the moving plate 23 and the adjustable plate 22.

Besides, at least one ladder type of fixing block 217 is set on a suitable position of the top cover 21 adjacent to the lower end of the cup 6, and there is only one fixing block 217 shown in Figs. 1, 2, 3 and 5. As a matter of fact, the plurality of fixing blocks 217 can be mounted on a plurality of locations of the top cover 21 around the lower end of the cup 6. A condition of a smaller bottom portion 2113 of the cup lets the cup be inserted deeper, and an inner side surface 2171 of the fixing block 217 then touches the cup; another condition of a larger bottom portion 2113 of the cup makes another inner side surface 2172 of the fixing block 217 touches the cup. Such structure can suitably stop the cup shaking within a smaller scope, and it is an auxiliary for the product due to the simple structure. Further, the organized shape of the fixing block 217 can be the type of reverse taper figure. Hence, while the cup is applied by more power into the fixing block 217, the cup is more tied up. The bias angle of the reverse taper figure is closer to 90°, the cup is fixed more easily. More, the surface of the fixing block 217 can be covered by soft material, and the bottom 2 is hard to move while the bottom 2 being sunk into the soft material. Since the edge of the bottom 2 is similar to be wrap around when the edge being sunk into the soft material.

As shown in Fig. 1, Fig. 2, Fig. 5 and Fig. 5C, the top cover 21 has one left clamping arm 218A and one right clamping arm 218B. An axis 2181 penetrates through an axial hole 218A1 of the left clamping arm 218A and an axial hole 218B1 of the right clamping arm 218B, then going through a hole 21821 of a clamping arm frame 2182. A pin 21822 is through a hole 21823 of the clamping arm frame 2182 and a hole 21811 of the axis 2181. The axis 2181 is affixed on the clamping arm frame 2182. A spherical non-return member 219 connects a L-type non-return arm 2191. A pin 2193 is through a hole 21941 of a U-type non-return arm frame 2194 and a hole 21911 of the non-return arm 2191 so as to that the non-return arm 2191 pivotally connecting the non-return arm frame 2194 for oscillation. The non-return arm frame 2194 is fastened on an upper end of the axis 2181. A left clamping member 218A2 and a right clamping member 218B2 pivotally connect a left clamping arm end 218A4 and a right clamping arm end 218B4 by way of a hinge 218A3 and another hinge 218B3. Therefore two arc surfaces 218A5 and 218B5 can be turned to fit with the figure of the cup. The non-return arm 2191 is lifted up while in use, then the spherical non-return member 219 oscillates toward right. Since two inner side surfaces 218A61 and 218B61 of a left non-return plates 218A6 and a right non-return plates 218B6 connecting the two clamping arms 218A and 218B are bevel surfaces, the distance between the two clamping arms 218A and 218B is longer while the spherical non-return member 219 being closer to right. The two clamping arms 218A and 218B are then opened, and the two inner side surfaces 218A61 and 218B61 continuously hold the spherical non-return member 219. Meanwhile to put into the cup, the two clamping arms 218A and 218B press toward the cup, constantly the two non-return plates 218A6 and 218B6 are opened and the non-return member 219 falls down by gravity and oscillates toward left, shown as the dot lines in Fig. 2. The non-return plates 218A6 and 218B6 stop opening after the cup is clamped by the two clamping arms 218A and 218B, the non-return member 219 oscillates toward to the inner side surface 218A61 of the non-return plate 218A6 for fastening the cup. Such that, the two clamping arm 218A and 218B cannot be opened in reverse so as to keeping the cup being held tightly. For picking the cup up, to lift the non-return arm 2191 up is the first action, the non-return member 219 moves toward right, therefore the two non-return plates 218A6 and 218B6 are released to open the two clamping arms 218A and 218B. Alternatively, a plurality of springs can be set on two end portions of external sides of the two clamping arms 218A and 218B to replace the spherical non-return member 219.

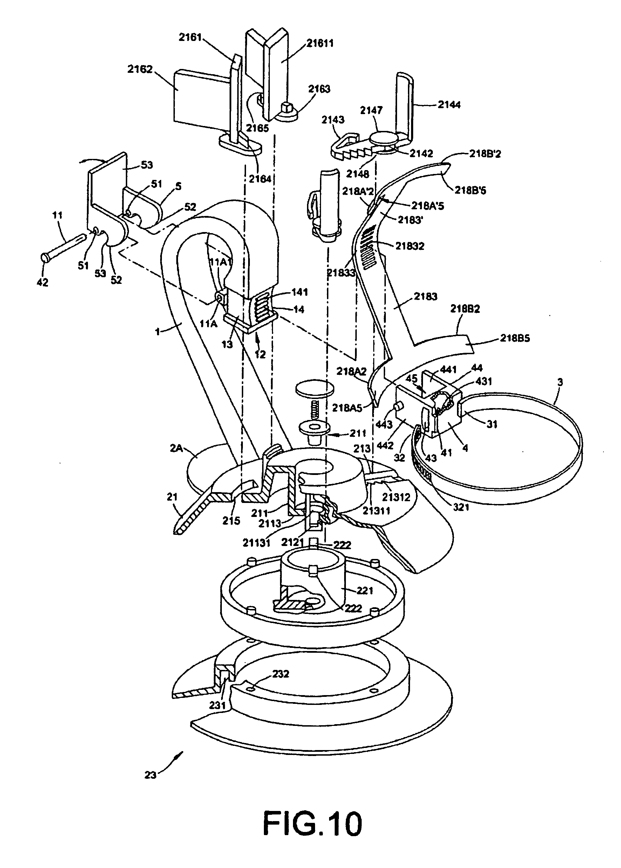

According to a second preferred embodiment of Fig. 10 to Fig. 11A, the structures of lower portion and the bottom are same as the first preferred embodiment, and it will not be described further. The same and similar parts between the first and the second embodiments are marked same numbers.

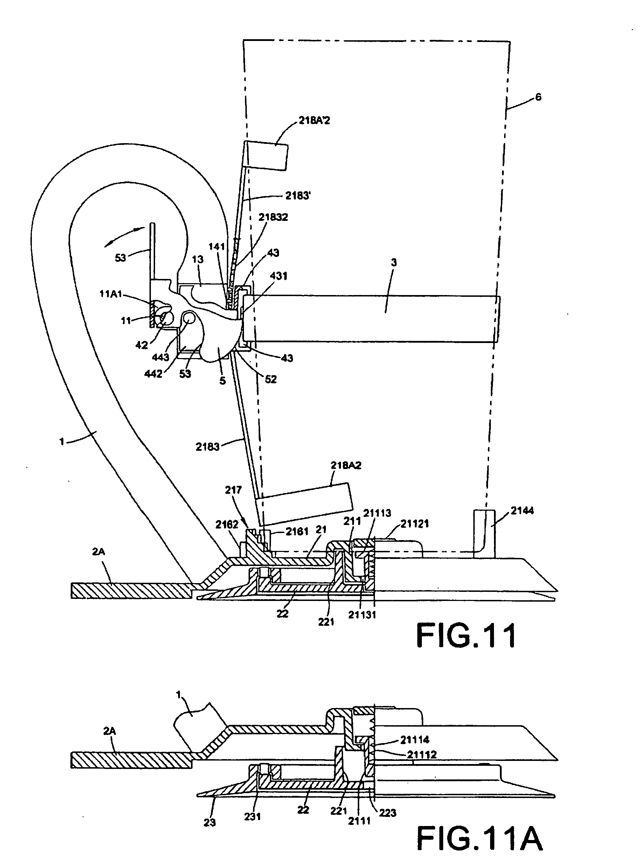

As shown in Fig. 10, a free end 32 of a flexible ring 3 has a plurality of rectangular holes 321. The free end 32 can insert into a through hole 43 of a buckling head 4, and a plurality of protrusions may be designed in the through hole 43, the protrusion is as a tooth 431, which can buckle the rectangular holes 321 for the free end 32 being not out of the buckling head 4. Instead, the protrusions as teeth 431 can also be settled on the flexible ring 3, and the protrusions cooperate with a concave in the buckling head 4. Such design may be possible to approach the example shown in Fig. 10. Two flexible plates 44 of the buckling head 4 are within two side surfaces 13 of a handle head 12 and moving horizontally. An axis 11 penetrates through an axial hole 51 of a buckling cam 5 and connects a hole 11A of a protruding member 11A1 of the handle head 12 so as to connect a buckling cam 5 and the handle head 12. A flange 42 of the axis 11 is to prevent the axis 11 taking off the buckling cam 5. Two inner sides 53 of the buckling cam 5 are shaped as a hook figure respectively. As shown in Fig. 11, clockwise turning the buckling cam 5 may hitch two pin members 443 to pull the buckling head 4 toward left. Two outer sides 52 of the buckling cam 5 are gradually pressed to close to the free end 32 of the flexible ring 3 (the free end 32 has penetrated through the through hole 43, and two opens of the through hole 43 has a free end respectively), the free end 32 is pressed toward right so as to make the rectangular hole 321 be put around the tooth 431 for not loosing the flexible ring 3 from the tooth 431. An I-type binder made by elastic steel is in between the buckling head 4 and the handle head 12, a lower portion 2183 of the binder has a left clamping member 218A2 and a right clamping member 218B2 extended from two sides of the lower portion 2183 toward the cup, and two elastic curve surfaces 218A5, 218B5 touch the cup. An upper portion 2183' of the binder has a structure similar to and shorter than the lower portion 2183 (the shorter length is designed for not bothering drinking water), and it will not described any further hereinafter. The figure of the binder is not limited by I-type and possible to be any other type, such as T-type.

The cup is put into the flexible ring 3 and tied up firmly by stirring the buckling cam 5 while in use. The cup may be shaped as cylinder-type or with different tapers, an axial central line of the cup may be deflective after the cup is tied up firmly. Hence, a structure for angle adjustment is a need. The solution is to design an arc surface 14 on the handle head 12 and other two arc surfaces 21833 and 45 in between a middle of the binder and an inner surface of the buckling head 4. The I-type binder is able to adjust deflective angles of the cup before tying the cup up. For ensuring the adjusted angle to be stable, a plurality of teeth 141 of the arc surface 14 can buckle a plurality of long holes 21832 up. Otherwise, if the buckling head 4 is power enough, the teeth 141 and the long holes 21832 can be ignored.

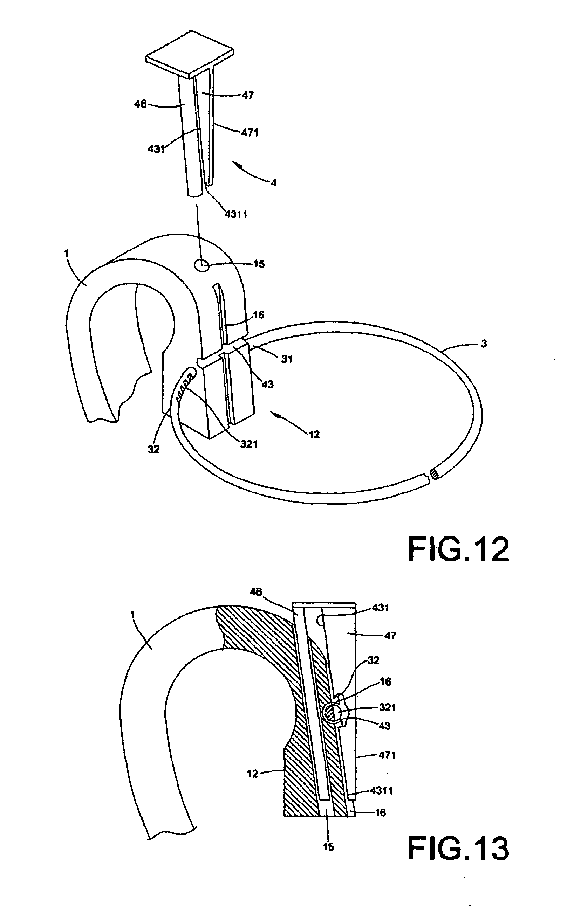

A third preferred embodiment is shown as in Fig. 12 and Fig. 13, a lower portion of the handle and a plurality of components on the lower portion may be the same as the second embodiment, so they are not drawn in Fig. 12 and Fig. 13.

A free end 32 of a flexible ring 3 with a round profile is settled a plurality of indentations 321. The free end 32 penetrates through a through hole 43 of a handle head 12. A cylindrical guiding column 46 of a buckling head 4 is capable of going through a guiding hole 15 of the handle head 12. A hook edge 431 of a wedge hook portion 43 of a wedge plate 47 inserts into one of the indentations 321 of the flexible ring 3 and a guiding slot 16 of the handle head 12. A guiding rail is composed of the guiding column 46, the guiding hole 15, the wedge plate 47 and the guiding slot 16, and downward insertion of the buckling head 4 may be with a bias angle toward right, shown as in Fig. 13. The free end 32 going through the through hole 43 is capable of adjusting the flexible ring 3; more, a lower end 4311 of the hook edge 431 through the indentation 321 is to buckle the free end 32 up. Hence the cup is put around by the flexible ring 3. While the wedge plate 47 moving further downward, a compress edge 471 of the wedge plate 47 moves toward right and presses to the cup gradually. It is then that the wedge plate 47 is as a chock to be within the handle head 12 and the cup for fixing the cup.

While the invention has been described by way of example and in terms of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. An adjustable cup-holder comprising:
- a bottom (2);
- a handle (1), a lower end of the handle (1) connecting the bottom (2); and
- a horizontally flexible ring (3);
wherein the flexible ring (3) and an upper end of the handle (1) are in an adjustable connection for different dimensions of cups, **characterized in that** a top cover (21) protruding downward and out of a cylindrical body (211) is set on a center of the bottom (2), a chassis (22) protruding upward and out of a socket is below the top cover (21), a sucker (23) is mounted on the chassis (22) for sealing, the top cover (21) and the bottom (2) connect each other for moving up and down and not being dismantled.

2. The adjustable cup-holder as cited in claim 1, wherein an end of the flexible ring (3) connects the handle (1) to form a fixing end, another end of the flexible ring (3) is a free end, the free end is adjustable and fixed on the handle (1) or the fixing end of the flexible ring (3).

3. The adjustable cup-holder as cited in claim 2 further comprises a buckling plate (4) protruding from the upper end of the handle (1) and a buckling cam (5) setting on the handle (1), the fixing end of the flexible ring (3) connects the buckling plate (4), a space between the buckling plate (4) and the buckling cam (5) is provided for the free end, the free end of the flexible ring (3) is fixed to a position by way of turning the buckling cam (5).

4. The adjustable cup-holder as cited in claim 3, wherein the buckling cam (5) is mounted on an axis elongated from the handle vertically or horizontally.

5. The adjustable cup-holder as cited in claim 3 further comprises a stirring rod (53) mounted on the buckling cam (5).

6. The adjustable cup-holder as cited in claim 3 further comprises a protruding portion mounted on the buckling plate (4) for keeping the cup on a correct position.

7. The adjustable cup-holder as cited in claim 3 further comprises a buckling head (4) mounted on the upper end of the handle (1), a through hole (223) is formed in the buckling head (4) for inserting the free end of the flexible ring (3).

8. The adjustable cup-holder as cited in claim 7, wherein the through hole (223) with a protrusion is formed in the buckling head (4), a plurality of holes are settled on the free end of the flexible ring (3) to match with the protrusion for fixing the free end of the flexible ring (3).

9. The adjustable cup-holder as cited in claim 7, wherein a plurality of dents are formed in the buckling head (4), and a protrusion is formed on the free end of the flexible ring (3) to match with one of the dents for fixing the free end of the flexible ring (3).

10. The adjustable cup-holder as cited in claim 8 or 9, wherein the protrusion is a tooth, a figure of the hole or the dent match with a figure of the tooth.

11. The adjustable cup-holder as cited in claim 8 or 9 further comprises the buckling cam (5) on a handle head (12), the buckling cam (5) matches with a horizontal protruding portion of the buckling head (4) by means of a guiding structure, and then turning the buckling cam (5) can fix the free end of the flexible ring (3) in the through hole (223) of the buckling head (4) firmly.

12. The adjustable cup-holder as cited in claim 11, wherein the guiding structure is a pair of hook structure on the buckling cam (5), the buckling head (4) has a pair of pin members (443) and a pair of flexible plates (44), the flexible plates (44) can move horizontally on the handle head (12), the hook structure hitches the two pin members (443) of the buckling head (4).

13. The adjustable cup-holder as cited in claim 12 further comprises an elastic binder between the buckling head (4) and the handle head (12).

14. The adjustable cup-holder as cited in claim 13, wherein the binder has a plurality of elastic curve clamping members.

15. The adjustable cup-holder as cited in claim 13, wherein the handle head (12), a middle of the binder and an inner surface of the buckling head (4) have an arc surface respectively.

16. The adjustable cup-holder as cited in claim 1 further comprises a wedge plate (47) in between the cup surrounded by the flexible ring (3) and an upper end of the handle (1), the wedge plate (47) and the upper end of the handle (1) cooperate each other for moving up and down so as to loosing or tying the flexible ring (3).

17. The adjustable cup-holder as cited in claim 16 further comprises a through hole (223) on the upper end of the handle (1) for inserting the flexible ring (3), a side of the through hole (223) is opened for appearing the flexible ring (3), a wedge hook portion (43) is set on the wedge plate (47), the free end of the flexible ring (3) is tied up while inserting the wedge downward.

18. The adjustable cup-holder as cited in claim 1, wherein a wall of the cylindrical body (21) has two stopping slots (212), the stopping slots (212) symmetrically cooperate with a plurality of stopping portions (222) located on an upper portion of the socket (221) of the chassis (22).

19. The adjustable cup-holder as cited in claim 1, wherein a supporting plate (2A) elongated from the handle (1) or the top cover (21) is set under the handle (1).

20. The adjustable cup-holder as cited in claim 1, wherein a plurality of baffles protrudes upward and are located around a lower end of the cup on the top cover (21) for stopping movement of the cup.

21. The adjustable cup-holder as cited in claim 20, wherein the baffle is shaped as ladder figure or bevel figure and mounted on the top cover (21) symmetrically.

22. The adjustable cup-holder as cited in claim 20, wherein a plurality of line-tooth fasteners are under the baffles, the line-tooth fasteners are set on a plurality of serrate slots (213) with plural serrate line teeth on the top cover (21) and match with the serrate line teeth of the serrate slots (213), the line-tooth fasteners are moveably mounted on the serrate slots (213) with plural serrate line teeth by means of an oscillating axis (2142) thereon, and around a central portion of each line-tooth fastener is an oscillating axis (2142), a center of the oscillating axis (2142) is a support point for the oscillation, plural spring pieces of the line-tooth fasteners touch plural walls of the serrate slots (213), therefore the serrate line teeth of the line-tooth fasteners are pushed to match with the serrate line teeth by the spring pieces, a plurality of curve baffles are elongated upward and set on the line-tooth fasteners for blocking an outer of a lower portion of the cup.

23. The adjustable cup-holder as cited in claim 20, wherein a plurality of arc sliding blocks (216) under the baffle are in plural arc slots respectively, and sliding back and forth therein.

24. The adjustable cup-holder as cited in claim 23, wherein outer of the baffle with the sliding blocks (216) have plural stirring plates and protruding blocks under the sliding blocks (216).

25. The adjustable cup-holder as cited in claim 20, wherein a plurality of converse clamping blocks are under the baffles, and plural arc slots are set on the top cover (21), the converse clamping blocks are in the arc slots, each of the converse clamping blocks is loosed to move while applying a force with a direction, otherwise, applying a force with an opposite direction or a stopping plate being pressed by the cup, the converse clamping block is then against the arc slot.

26. The adjustable cup-holder as cited in claim 25, wherein each of the converse clamping blocks has two sharp tips, an outer of the converse clamping block has a stirring plate, and a protruding block is set under the converse clamping block.

27. The adjustable cup-holder as cited in claim 1, wherein a clamping arm frame is moveably mounted on the top cover, a left clamping arm and a right clamping arm are pivotally connected to the clamping arm frame, a movable non-return member is in between two tip portions of outer portions of the left clamping arm and the right clamping arm, while the non-return member moves away from the left clamping arm and the right clamping arm, the left position between two tip portions of outer portions of the left clamping arm and the right clamping arm can contain or take off the cup, otherwise, the cup is clamped tightly.

28. The adjustable cup-holder as cited in claim 1, wherein the top cover (21) has a narrow slot with a sliding block (216), the sliding block (216) has a flange beneath, an rotatable eccentric cam is mounted on the sliding block, while the sliding block is pushed to touch an outer edge of a lower portion of the cup, the sliding block (216) is fixed firmly to stop the cup by means of turning the eccentric cam.

29. The adjustable cup-holder as cited in claim 20, wherein the baffle is shaped as pin-type, a moving plate (23) is placed above the top cover (21), and an adjustable plate (22) is mounted above the moving plate (23), three radial seams are symmetrically distributed over the moving plate (23), an outer side of the moving plate (23) relative to the handle (1) is set a cam positioning device, the adjustable plate (22) has three symmetrical involute arc seams, three pin-type baffles penetrate through the involute arc seams and the radial seams and slide therein, while the baffles hold the bottom of the cup, the cam positioning device fixes the moving plate (23) and the adjustable plate (22) relatively to the top cover (21).

30. The adjustable cup-holder as cited in claim 29, wherein the cam positioning device includes a T-type bonding block (234) and the eccentric cam (236), a vertical portion of the T-type bonding block (234) is through an axis and connects the eccentric cam (236), a horizontal portion of the bonding block (234) is through a long hole of the top cover (21) for pressing onto an inner surface of the top cover, each of the pin-type baffle has a ring located on an upper side of the adjusting plate, a lower end of the baffle penetrates through the arc seam and the radial seam to connect a small round cover, which is lager than the seams.

## Patentansprüche

1. Einstellbarer Tassenhalter, bestehend aus:
einer Bodenseite (2);
einem Griff (1), einem unteren Ende des Griffs (1), das an die Bodenseite (2) angeschlossen ist; und
einem Ring (3), der in waagerechter Richtung flexibel ist;
wo der flexible Ring (3) und ein oberes Ende des Griffs (1) in einem verstellbaren Anschluss für Tassen verschiedener Größe sind, **dadurch gekennzeichnet, dass** eine obere Abdeckung (21), die nach unten und aus dem Zylindergehäuse (211) ragt, sich in der Mitte der Bodenseite (2) befindet; ein Chassis (22), das nach oben und aus einem Sockel ragt, sich unter der oberen Abdeckung (21) befindet; ein Saugfuß (23) zum Abdichten auf dem Chassis (22) montiert ist; die obere Abdeckung (21) und die Bodenseite (2) mit einander verbunden sind, um sich nach oben und unten zu bewegen, ohne zerlegt zu werden.

2. Einstellbarer Tastenhalter gemäß Anspruch 1, wo ein Ende des flexiblen Rings (3) mit dem Griff (1) verbunden ist, um ein Befestigungsende zu bilden, ein anderes Ende des flexiblen Rings (3) ein freies Ende ist, welches freie Ende einstellbar und am Griff (1) oder am Befestigungsende des flexiblen Rings (3) befestigt ist.

3. Der einstellbare Tastenhalter gemäß Anspruch 2 enthält des Weiteren eine Knickplatte (4), die aus dem oberen Ende des Griffs (1) ragt, und einen Knicknocken (5), die am Griff (1) befestigt ist; das Befestigungsende des flexiblen Rings (3) ist an die Knickplatte (4) angeschlossen, und es gibt einen freien Abstand zwischen der Knickplatte (4) und dem Knicknocken (5) für das freie Ende; das freie Ende des flexiblen Rings (3) ist durch Drehen des Knicknockens (5) an einer Position befestigt.

4. Einstellbarer Tastenhalter gemäß Anspruch 3, wo den Knicknocken (5) an einer Achse montiert ist, die sich senkrecht oder waagerecht aus dem Griff erstreckt.

5. Der einstellbare Tastenhalter gemäß Anspruch 3 enthält des Weiteren einen Rührstab (53), der am Knicknocken (5) befestigt ist.

6. Der einstellbare Tastenhalter gemäß Anspruch 3 enthält des Weiteren einen vorstehenden Teil, der auf der Knickplatte (4) montiert ist, um die Tasse an der korrekten Position zu halten.

7. Der einstellbare Tastenhalter gemäß Anspruch 3 enthält des Weiteren einen Knickkopf (4), der am oberen Ende des Griffs (1) montiert ist; ein Durchgangsloch (223) wird in der Mitte des Knickkopfs (4) gebildet, um das freie Ende des flexiblen Rings (3) einzuführen.

8. Einstellbarer Tastenhalter gemäß Anspruch 7, wo das Durchgangsloch (223) mit einem Vorsprung im Knickkopf (4) gebildet wird; mehrere Löcher befinden sich am freien Ende des flexiblen Rings (3), um mit dem Vorsprung zum Befestigen des freien Endes des flexiblen Rings (3) übereinzustimmen.

9. Einstellbarer Tastenhalter gemäß Anspruch 7, wo mehrere Kerben im Knickkopf (4) geformt sind und ein Vorsprung am freien Ende des flexiblen Rings (3) geformt ist, um mit einer der Kerben zum Befestigen des freien Endes des flexiblen Rings (3) übereinzustimmen.

10. Einstellbarer Tastenhalter gemäß Anspruch 8 oder 9, wo der Vorsprung ein Zahn ist und eine Figur des Lochs oder der Kerbe mit der Figur des Zahns übereinstimmt.

11. Der einstellbare Tastenhalter gemäß Anspruch 8 oder 9 enthält des Weiteren einen Knicknocken (5) auf einem Griffkopf (12), der Knicknocken (5) passt dank einer Führung auf den waagerechten Vorsprung am Knickkopf (4), und durch Drehen kann der Knicknocken (5) das freie Ende des flexiblen Rings (3) fest im Durchgangsloch (223) des Knickkopfs (4) befestigen.

12. Einstellbarer Tastenhalter gemäß Anspruch 11, wo die Führung aus einem Paar Haken auf dem Knicknocken (5) besteht, der Knickkopf (4) ein Paar Stifte (443) und ein Paar flexible Platten (44) enthält, die flexiblen Platten (44) sich waagerecht auf dem Griffkopf (12) bewegen können und die Haken die beiden Stifte (443) des Knickkopfs (4) festhaken.

13. Der einstellbare Tastenhalter gemäß Anspruch 12 enthält des Weiteren einen elastischen Binder zwischen den Knickkopf (4) und dem Griffkopf (12).

14. Einstellbarer Tastenhalter gemäß Anspruch 13, wo der Binder mehrere elastische Kurvenklemmteile enthält.

15. Einstellbarer Tastenhalter gemäß Anspruch 13, wo der Griffkopf (12), eine Bindermitte und einen Innenfläche des Knickkopfs (4) jeweils eine Bogenfläche aufweisen.

16. Der einstellbare Tastenhalter gemäß Anspruch 1 enthält des Weiteren eine Keilplatte (47) zwischen der Tasse, die vom flexiblen Ring (3) umgeben wird und einem oberen Ende des Griffs (1); die Keilplatte (47) und das obere Ende des Griffs (1) kooperieren, um sich gemeinsam nach oben und unten zu bewegen, um den flexiblen Ring (3) zu lockern oder festzuziehen.

17. Der einstellbare Tastenhalter gemäß Anspruch 16 enthält des Weiteren ein Durchgangsloch (223) am oberen Ende des Griffs (1) zum Einführung des flexiblen Rings (3); eine Seite des Durchgangslochs (223) ist geöffnet, um den flexiblen Ring (3) anzuzeigen; ein Keilhaken (43) befindet sich auf der Keilplatte (47); das freie Ende des flexiblen Rings (3) wird festgehalten, wenn der Keil nach unten eingeführt wird.

18. Einstellbarer Tastenhalter gemäß Anspruch 1, wo eine Wand des Zylinders (21) zwei Stoppschlitze (212) enthält, die Stoppschlitze (212) symmetrisch mit den verschiedenen Stoppteilen (222) kooperieren, die sich auf dem oberen Teil des Sockels (221) des Chassis (22) befinden.

19. Einstellbarer Tastenhalter gemäß Anspruch 1, wo eine Stützplatte (2A), die aus dem Griff (1) oder der oberen Abdeckung (21) ragt, unter dem Griff (1) liegt.

20. Einstellbarer Tastenhalter gemäß Anspruch 1, wo mehrere Ablenkbleche nach oben hervorragen und sich um ein unteres Ende der Tasse auf der oberen Abdeckung (21) befinden, um die Bewegung der Tasse zu stoppen.

21. Einstellbarer Tastenhalter gemäß Anspruch 20, wo das Ablenkblech leiter- oder kegelförmig geformt und symmetrisch auf der oberen Abdeckung (21) montiert ist.

22. Einstellbarer Tastenhalter gemäß Anspruch 20, wo sich mehrere Zahnverschlüsse unter den Ablenkblechen befinden, die Zahnverschlüsse sich auf mehreren Kerbschlitzen (213) befinden, mit Kerbzähne auf der oberen Abdeckung (21), die auf die Kerbzähne der Kerbschlitze (213) passen, die Zahnverschlüsse mit mehreren Kerbzähnen beweglich auf den Kerbschlitzen (213) montiert sind, dank einer darauf befindlichen Schwingungsachse (2142), wo um jeden mittleren Teil jedes Zahnverschlusses eine Schwingungsachse (2142) vorhanden ist, eine Mitte der Schwingungsachse (2142) als Stützpunkt für die Schwingung dient, mehrere Federn auf den Zahnverschlüssen mehrere Wände den Kerbschlitze (213) berühren, deshalb die Kerbzähne der Zahnverschlüsse durch die Kraft der Federn so gedrückt werden, dass sie auf die Kerbzähne passen, mehrere Kurvenablenkbleche nach oben verlängert werden und sich auf den Zahnverschlüssen befinden, um den unteren Außenteil den Tasse zu blockieren.

23. Einstellbarer Tastenhalter gemäß Anspruch 20, wo sich mehrere Bogengleitblöcke (216) unter dem Ablenkblech jeweils in einem Bogenschlitz befinden und darin hin und her gleiten.

24. Einstellbarer Tastenhalter gemäß Anspruch 23, wo die Außenseite des Ablenkblechs mit den Gleitblöcken (216) mehrere Rührplatten und vorstehende Blöcke und den Gleitblöcken (216) enthält.

25. Einstellbarer Tastenhalter gemäß Anspruch 20, wo mehrere reziproke Klemmblöcke unter den Ablenkblechen vorhanden sind und sich mehrere Bogeschlitze auf der oberen Abdeckung (21) befinden, die reziproken Klemmblöcke sind in den Bogenschlitzen befinden, jeder der reziproken gelockert ist, um sich zu bewegen und eine gerichtete Kraft auszuüben, anderenfalls eine Kraft in der reziproken Richtung ausübt, oder eine Stoppplatte durch die Tasse gedrückt wird, so dass der reziproke Klemmblock gegen den Bogenschlitz zu liegen kommt.

26. Einstellbarer Tastenhalter gemäß Anspruch 25, wo jeder der reziproken Klemmblöcke zwei scharfe Spitzen aufweist, die Außenseite des reziproken Klemmblocks eine Rührplatte aufweist und ein herausragender Block sich unter dem reziproken Klemmblock befindet.

27. Einstellbarer Tastenhalter gemäß Anspruch 1, wo ein Klemmarmrahmen beweglich auf der oberen Abdeckung montiert ist, ein linker und ein rechter Klemmarm zentral mit dem Klemmarmrahmen verbunden sind, ein bewegliches, nicht rückkehrendes Teil sich zwischen den beiden Spitzen des Außenteils des linken und des rechten Klemmarms befindet, während das nicht rückkehrende Teil sich vom linken und rechten Klemmarm weg bewegt, die linke Position zwischen den beiden Spitzen des Außenteils des linken und des rechten Klemmarms die Tasse fassen oder abnehmen bzw. festhalten kann.

28. Einstellbarer Tastenhalter gemäß Anspruch 1, wo die obere Abdeckung (21) einen engen Schlitz mit einem Gleitblock (216) aufweist, der Gleitblock (216) einen Flansch darunter enthält, ein drehbarer Exzenternocken auf dem Gleitblock montiert ist; während der Gleitblock gedrückt wird, um den Außenrand des unteren Teils der Tasse zu berühren, ist der Gleitblock (216) sicher befestigt, um die Tasse durch Drehen des Exzenternockens zu stoppen.

29. Einstellbarer Tastenhalter gemäß Anspruch 20, wo das Ablenkblech stiftförmig geformt ist, eine bewegliche Platte (23) über die obere Abdeckung (21) platziert ist, und eine verstellbare Platte (22) über der beweglichen Platte (23) montiert ist; wo drei Radialnähte symmetrisch über der beweglichen Platte (23) verteilt sind, eine Außenseite der beweglichen Platte (23) relativ zum Griff (1) auf einen Nocken gesetzt ist, die verstellbare Platte (22) drei symmetrische Evolventennähte aufweist, drei stiftförmige Ablenkbleche durch die Evolventen- und die Radialnähte dringen und dort gleiten; während das Ablenkblech den unteren Teil der Tasse festhält, befestigt die Nockenpositioniervorrichtung die bewegliche Platte (23) und die verstellbare Platte (22) relativ zur oberen Abdeckung (21).

30. Einstellbarer Tastenhalter gemäß Anspruch 29, wo die Nockenpositioniervorrichtung einen T-förmigen Verbindungsblock (234) und den Exzenternocken (236) enthält, ein senkrechter Teil des T-förmigen Verbindungsblocks (234) durch eine Achse führt und den Exzenternocken (236) verbindet, ein waagerechter Teil des T-förmigen Verbindungsblocks (234) durch ein langes Loch auf der oberen Abdeckung (21) führt, um auf die Innenseite der oberen Abdeckung zu drücken, jeden der stiftförmigen Ablenkbleche einen Ring auf der Oberseite der Einstellplatte enthält, ein unteres Ende des Ablenkblechs durch die Bogen- und die Radialnaht dringt, um eine kleine runde Abdeckung zu verbinden, die größer ist als die Nähte.

## Revendications

1. Porte-gobelet réglable comprenant:
une semelle (2);
une poignée (1), une extrémité inférieure de la poignée (1) connectant la semelle (2); et
une bague flexible horizontalement (3);
dans lequel la bague flexible (3) et une extrémité supérieure de la poignée (1) sont de connexion réglable pour différentes dimensions de tasses, **caractérisé en ce qu'**un couvercle supérieur (21) dépassant vers le bas et hors d'un corps cylindrique (211) est placé sur un centre de la semelle (2), un châssis (22) dépassant vers le haut et à l'extérieur d'une prise se trouve sous (23) le couvercle supérieur (21); un dispositif de succion est monté sur le châssis (22) pour blocage, le couvercle supérieur (21) et la semelle (2) se connectent l'un à l'autre pour se déplacer vers le haut et le bas et sans être démontés.

2. Le porte-gobelet réglable tel que cité dans la revendication 1, dans lequel une extrémité de la bague horizontale (3) connecte la poignée (1) pour former une extrémité de fixation, une autre extrémité de la bague flexible (3) est une extrémité libre, l'extrémité libre est réglable et fixée sur la poignée (1) ou l'extrémité de fixation de la bague flexible (3).

3. Le porte-gobelet réglable tel que cité dans la revendication 2 comprend en outre une plaque de flambage (4) dépassant de l'extrémité supérieure de la poignée (1) et une came de flambage (5) se fixant sur la poignée (1) l'extrémité de fixation de la bague flexible (3) se connecte à la plaque de flambage (4), un espace entre la plaque de flambage (4) et la came de flambage (5) fourni pour l'extrémité libre, l'extrémité libre de la bague flexible (3) est fixée sur une position au moyen de la rotation de la came de flambage (5).

4. Le porte-gobelet tel que cité dans la revendication 3, dans lequel la came de flambage (5) est montée sur un axe allongé à partir de la poignée verticalement ou horizontalement.

5. Le port-gobelet réglable tel que cité dans la revendication 3 comprend en outre une tige rotative (53) montée sur la came de flambage (5).

6. Le porte-gobelet réglable tel que cité dans la revendication 3 comprend en outre une partie saillante montée sur la plaque de flambage (4) pour maintenir la tasse dans une position correcte.

7. Le porte-gobelet réglable tel que cité dans la revendication 3 comprend en outre une tête de flambage (4) montée sur l'extrémité supérieure de la poignée (1), un orifice de passage (223) est formé dans la tête de flambage (4) pour insérer l'extrémité libre de la bague flexible (3).

8. Le porte-gobelet réglable tel que cité dans la revendication 7, dans lequel l'orifice de passage (223) avec une protubérance est formé dans la tête de flambage (4), une pluralité de trous sont disposés sur l'extrémité libre de la bague flexible (3) pour correspondre à la protubérance afin de fixer l'extrémité libre de la bague flexible (3).

9. Le porte-gobelet réglable tel que cité dans la revendication 7, dans lequel une pluralité de creux sont formés dans la tête de flambage (4), et une protubérance est formée sur l'extrémité libre de la bague flexible (3) pour correspondre à l'un des creux afin de fixer l'extrémité libre de la bague flexible (3).

10. Le porte-gobelet réglable tel que cité dans la revendication 8 ou 9, dans lequel la protubérance est une dent, une forme du trou ou le creux correspondant avec une forme de la dent.

11. Le porte-gobelet réglable tel que cité dans la revendication 8 ou 9 comprend en outre la came de flambage (5) sur une tête de poignée (12), la came de flambage (5) correspond avec une partie saillante horizontale de la tête de flambage (4) par des moyens d'une structure de guidage, tourner ensuite la came de flambage (5) peut fixer fermement l'extrémité libre de la bague flexible (3) dans l'orifice de passage (223) de la tête de flambage (4).

12. Le porte-gobelet réglable tel que cité dans la revendication 11, dans lequel la structure de guidage est une paire de structures d'ancrage sur la came de flambage (5), la tête de flambage (4) dispose d'une paire d'élément de tige de rivetage (443) et d'une paire de plaques souples (44), les plaques souples (44) peuvent se déplacer horizontalement sur la tête de poignée (12), la structure d'ancrage s'attèle aux deux éléments de tige de rivetage (443) de la tête de flambage (4).

13. Le porte-gobelet réglable tel que cité dans la revendication 12 comprend en outre un liant élastique entre la tête de flambage (4) et la tête de poignée (12).

14. Le porte-gobelet réglable tel que cité dans la revendication 13, dans lequel le liant dispose d'une pluralité d'éléments de blocage courbes élastiques.

15. Le porte-gobelet réglable tel que cité dans la revendication 13, dans lequel la tête de poignée (12), un milieu du liant et une paroi intérieure de la tête de flambage (4) présentent respectivement une surface en arc.

16. Le porte-gobelet réglable tel que cité dans la revendication 1 comprend en outre une plaque de cale de blocage (47) entre la tasse entourée par la bague flexible (3) et une extrémité supérieure de la poignée (1), la plaque de cale de blocage (47) et l'extrémité supérieure de la poignée (1) coopèrent l'une et l'autre pour se déplacer vers le haut et vers le bas de façon à relâcher ou serrer la bague flexible (3).

17. Le porte-gobelet réglable tel que cité dans la revendication 16 comprend en outre un orifice de passage (223) sur l'extrémité supérieure de la poignée (1) pour insérer la bague flexible (3), un côté de l'orifice de passage (223) est ouvert pour faire apparaitre la bague flexible(3), une partie d'ancrage de cale de blocage (43) est placée sur la plaque de cale d'ancrage (47), l'extrémité libre de la bague flexible (3) est attachée tout en insérant la cale de blocage vers le bas.

18. Le porte-gobelet réglable tel que cité dans la revendication 1, dans lequel une paroi du corps cylindrique (21) dispose de deux fentes d'arrêt (212), les fentes d'arrêt coopèrent symétriquement avec une pluralité de parties d'arrêt (222) situées sur une partie supérieure de la prise (221) du châssis (22).

19. Le porte-gobelet réglable tel que cité dans la revendication 1, dans lequel une plaque de support (2A) étirée depuis la poignée (1) ou le couvercle supérieur (21) est placée sous la poignée (1).

20. Le porte-gobelet réglable tel que cité dans la revendication 1, dans lequel une pluralité de chicanes dépassent vers le haut et sont situées autour d'une extrémité inférieure de la tasse sur le couvercle supérieur (21) pour stopper le mouvement de la tasse.

21. Le porte-gobelet réglable tel que cité dans la revendication 20, dans lequel la chicane est en forme d'échelle ou en forme de biseau et montée symétriquement sur le couvercle du haut (21).

22. Le porte-gobelet réglable tel que cité dans la revendication 20, dans lequel une pluralité de pièces de fixation de dents en ligne se trouvent sous les chicanes, les pièces de fixation de dents en ligne sont placées sur une pluralité de fentes dentées (213) avec plusieurs dents de ligne dentée sur le couvercle du haut (21) et correspondent avec les dents de ligne dentée des fentes dentées (213), les pièces de fixation de dents en ligne sont montées de façon mobile sur les fentes dentées (213) avec plusieurs des dents de ligne dentée par des moyens d'axe oscillant (2142), un centre de l'axe oscillant (2142) est un point de support pour l'oscillation, plusieurs pièces de ressort des pièces de fixation de dents en ligne touchent plusieurs parois des fentes dentées (213), ainsi les dents de ligne dentée des pièces de fixation de dents en ligne sont poussées pour correspondre avec les dents de ligne dentée par les pièces du ressort, une pluralité de chicanes en courbe sont élongées vers le haut et placées sur les pièces de fixation de dents en ligne pour bloquer la partie extérieure inférieure de la tasse.

23. Le porte-gobelet réglable tel que cité dans la revendication 20, dans lequel une pluralité de blocs coulissants en arc (216) sous la chicane se trouvent dans une pluralité de fentes en arc respectivement, et glissant en va-et-vient.

24. Le porte-gobelet réglable tel que cité dans la revendication 23, dans lequel l'extérieur de la chicane avec les blocs coulissants (216) disposent de plusieurs plaques rotatives et de blocs protubérants sous les blocs coulissants (216).

25. Le porte-gobelet réglable tel que cité dans la revendication 20, dans lequel une pluralité de blocs de blocage se trouvent sous les chicanes, et plusieurs fentes en arc sont placées sur le couvercle du haut (21), les blocs de blocage réciproques se trouvent dans les fentes en arc, chacun des blocs de blocage réciproques est décoincé pour bouger en appliquant une force dans une direction, sinon, en appliquant une force dans une direction opposée ou une plaque d'arrêt étant pressée par la tasse, le bloc de blocage réciproque est ensuite contre la fente en arc.

26. Le porte-gobelet réglable tel que cité dans la revendication 25, dans lequel chacun des blocs de blocage réciproques dispose de deux bouts pointus, un bout du bloc de blocage réciproque dispose d'une plaque rotative, et un bloc saillant est placé sous le bloc de blocage réciproque.

27. Le porte-gobelet réglable tel que cité dans la revendication 1, dans lequel le cadre de bras de serrage est monté de façon mobile sur le couvercle supérieur, un bras de serrage gauche et un bras de serrage droit sont connectés de façon pivotante au cadre du bras de serrage, un élément de non retour se trouve entre deux parties de pointe des parties extérieures du bras de serrage gauche et du bras de serrage droit, lorsque l'élément de non-retour s'éloigne du bras de serrage gauche et du bras de serrage droit, la position restante entre deux parties de pointes des parties extérieures du bras de serrage gauche et du bras de serrage droit peut contenir ou desserrer la tasse, sinon la tasse est étroitement bloquée.

28. Le porte-gobelet réglable tel que cité dans la revendication 1, dans lequel le couvercle supérieur (21) dispose d'une fente étroite avec un patin (216), le patin (216) dispose d'une flasque en dessous, une came excentrique orientable est montée sur le patin, lorsque le patin est poussé pour toucher une arête extérieure d'une partie inférieure de la tasse, le patin (216) est fermement fixé pour stopper la tasse par des moyens de rotation de la came excentrique.

29. Le porte-gobelet réglable tel que cité dans la revendication 20, dans lequel la chicane est formée comme un ergot, une plaque mobile (23) est placée au dessus du couvercle supérieur (21), et une plaque réglable (22) est montée au dessus de la plaque mobile (23), trois rivures radiales sont distribuées symétriquement au dessus de la plaque mobile (23), un côté extérieur de la plaque mobile (23) relativement à la poignée (1) est placé un dispositif de positionnement de came, la plaque réglable (22) dispose de trois rivures en arc à développante symétriques, trois chicanes de type ergots pénètrent à travers les rivures en arc développantes et les rivures radiales et glissent ainsi, lorsque les chicanes maintiennent le bas de la tasse, le dispositif de positionnement de la came fixe la plaque mobile (23) et la plaque réglable (22) relativement au couvercle supérieur (21).

30. Le porte-gobelet réglable tel que cité dans la revendication 29, dans lequel le dispositif de positionnement de la came inclut un bloc de collage de type T (234) et la came excentrique (236), une partie verticale du bloc de collage de type T (234) passe à travers un axe et connecte la came excentrique (236), une partie horizontale du bloc de collage (234) passe à travers un trou profond du couvercle supérieur (21) afin de presser sur une surface interne du couvercle supérieur, chacune des chicanes de type ergot dispose d'une bague située sur une face supérieure de la plaque ajustable, une extrémité inférieure de la chicane pénètre à travers la rivure en arc et les rivures radiales pour connecter un petit couvercle rond, qui est plus grand que les rivures.
